# EUROPÄISCHE PATENTANMELDUNG

(11) **EP 1 126 655 A1**
(43) Veröffentlichungstag der Anmeldung: **22.08.2001**
(21) Anmeldenummer: 00103075.8
(22) Anmeldetag: 15.02.2000
(51) Int. Cl.: H04L 9/32, H04L 29/06, G06F 1/00, G01R 21/133

(54) **Verfahren zur Authentizitätssicherung von Hard- und Software in einem vernetzten System**

(71) Anmelder: SIEMENS AKTIENGESELLSCHAFT, 80333 München (DE)
(72) Erfinder: Eitel, Peter, 85649 Brunnthal (DE); Von der Heidt, Guido, 86899 Landsberg (DE); Retzow, Uwe, 81739 München (DE)

(57) **Zusammenfassung**

Die Erfindung betrifft ein Verfahren zur Sicherung eines vernetzten Systems (S), das über einen Systembus (SB) verbundene Systemkomponenten (SK1...SKn) mit Hardware- und Software-Modulen aufweist. Erfindungsgemäß weisen die Systemkomponenten (SK1...SKn) jeweils ein Authentifizierungsmerkmal (K1...Kn) für die Hardware-Module und/oder jeweils ein weiteres Authentifizierungs- beziehungsweise ein Integritätssicherungsmerkmal (S1...Sn) für die Software-Module auf. Weiter ist ein am Systembus (SB) angeschaltetes, zentrales Prüfmodul (PM) zur Überprüfung der Authentifizierungsmerkmale (K1...Kn) und/oder der Integritätssicherungsmerkmale (S1...Sn) vorgesehen.

## Beschreibung

Die Erfindung betrifft ein Verfahren gemäß dem Oberbegriff des Patentanspruchs 1.

Ein solches System kann beispielsweise durch folgende Szenarien gebildet werden:
- System zur Fernabfrage von Stromzähler-Ständen über die Powerline beziehungsweise das Stromversorgungsnetz,
- Datenbank-Server mit Zugriffen über Clients,
- Client-/Server-Konfiguration mit internem Datenaustausch,
- Ferneinstellung von Geräten,
- Fernabfrage von Kontoständen,
- System in einem Fahrzeug mit vernetzten Prozessoren/Micro-Controllern, insbesondere Motorsteuerung, Alarmanlage oder zentrale Türsicherung,
- usw.

Allgemein bekannt sind symmetrische und asymmetrische Verschlüsselungsverfahren, mit denen ein sicherer Nachrichtenkanal zwischen Kommunikationsteilnehmern gebildet wird. Weiter sind symmetrische und asymmetrische Verfahren, wie beispielsweise eine digitale Signatur oder ein Message Authentication Code (MAC), allgemein gebräuchlich, mit der die Authentizität und/oder die Integrität einer Nachricht, eines Teilnehmers, oder auch ein Schlüssel von einer Empfangsstelle überprüft werden kann. Allgemeine Grundlagen sind beispielsweise in dem Buch "Kryptografie" von W. Fumy und H. P. Rieß, Entwurf und Analyse symmetrischer Kryptosysteme, R. Oldenbourg Verlag München, Wien, 1988, beschrieben.

Der Erfindung liegt die Aufgabe zugrunde, die eingangs genannten Hard-/Softwaresysteme gegen unbefugte Manipulationen zu schützen.

Diese Aufgabe wird erfindungsgemäß durch die im Patentanspruch 1 angegebenen Merkmale gelöst.

Das erfindungsgemäße Verfahren schützt die Hard- und Software-Bausteine eines Systems insbesondere während des Wirkbetriebes gegen unbefugte Veränderungen beziehungsweise erkennt Manipulationen.

Bei einer Weiterbildung des erfindungsgemäßen Verfahrens ist der externe Zugriff auf die Bausteine des Systems gesichert. Dies umfaßt unter Anderem den Austausch oder die Erneuerung von Systemkomponenten beziehungsweise als Teile davon Hard- und Software-Bausteine.

Weitere vorteilhafte Ausgestaltungen sind in den Unteransprüchen angegeben.

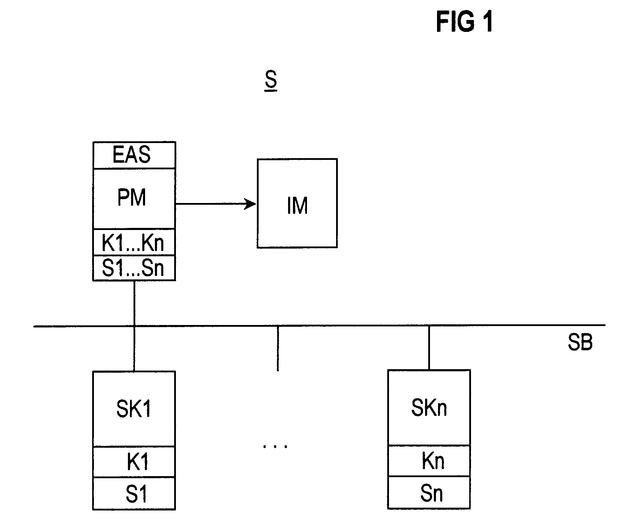

Im Folgenden wird die Erfindung anhand eines in der Zeichnung dargestellten Ausführungsbeispieles beschrieben.

In der einzigen Figur ist ein System S dargestellt, das über einen Systembus SB verbundene Systemkomponenten SK1 bis SKn aufweist. Die Systemkomponenten SK1 bis SKn weisen nicht näher angegebene Hardware- und Softwaremodule auf, die gemäß den spezifischen Aufgaben der jeweiligen Systemkomponente SK1 bis SKn ausgebildet sind.

Die Systemkomponenten SK1 bis SKn werden beispielsweise durch Personalcomputer, Drucker und Server, aber auch durch Bausteine in einer Motorsteuerung, wie beispielsweise Prozessor und Speicherbausteine realisiert.

Erfindungsgemäß ist im System S ein zentrales Prüfmodul PM vorgesehen, das mit dem Systembus SB verbunden ist. Weiter sind die Hardware-Module in den Systemkomponenten SK1 bis SKn mit Authentifizierungsmerkmalen K1 bis Kn versehen. Des Gleichen weisen die Software-Module der Systemkomponenten SK1 bis SKn weitere Authentifizierungs- beziehungsweise Integritätssicherungsmerkmale S1 bis Sn auf.

Die Speicherung der Integritätssicherungsmerkmale S1 bis Sn ist optional gemäß der Ausprägung des Systems S.

Die Authentifizierungsmerkmale K1 bis Kn beziehungsweise die Integritätssicherungsmerkmale S1 bis Sn werden vorzugsweise am Ende des Entwicklungsprozesses der jeweiligen Module vor der Auslieferung erzeugt. Das Authentifizierungsmerkmal (K1 bis Kn) ist beispielsweise die Seriennummer einer Hardwareschaltung, und kann beispielsweise zusätzlich mit einem Datum versehen sein. Die Integritätssicherungsmerkmale S1 bis Sn sind vorzugsweise digitale Signaturen unter Verwendung eines Public Key Verfahrens oder symmetrische Authentizitäts- beziehungsweise Integritätscodes (MAC, Message Authentication Codes) die von einer vertrauenswürdigen Instanz erzeugt werden

Die Hardware-Software-Bausteine des jeweiligen Systems S werden im Wirkbetrieb überprüft. Die Überprüfung kann durch ein sogenanntes Trap, das heisst, durch eine Aufforderung einer der Systemkomponenten SK1 bis SKn hin erfolgen. Die Überprüfung kann auch durch ein sogenanntes Polling, das heisst, auf eine Aufforderung des Prüfmoduls PM hin erfolgen. Die Überprüfung der Authentifizierungsmerkmale K1 bis Kn beziehungsweise der Integritätssicherungsmerkmale S1 bis Sn erfolgt in jedem Fall zentral im Prüfmodul PM. Die Überprüfung kann beispielsweise durch ein Herunterfahren beziehungsweise Ausschalten des Systems S, aber auch beispielsweise in bestimmten Zeitabständen während des Betriebes durchgeführt werden.

Beim Erkennen von Inkonsistenzen kann das System S beispielsweise abgeschaltet werden. Es ist auch möglich, eine mehr oder weniger detaillierte Meldung an einem Informationsmodul IM auszugeben. Hierzu ist das Informationsmodul IM beispielsweise direkt mit dem Prüfmodul PM verbunden.

Bei einer Weiterbildung der Erfindung weist das Prüfmodul PM eine Eingabe-Ausgabe-Schnittstelle EAS auf. Diese Schnittstelle EAS bildet den einzigen Zugang zum System S. Das heisst, über diese Schnittstelle EAS erfolgt ein externer Zugriff auf Daten und Funktionen des Systems S. Hierbei erfolgt jeweils eine Authentifizierung und eine Überprüfung der Zugriffsrechte der zugreifenden Person beziehungsweise Instanz.

Eine weitere Zugriffsart ist beispielsweise der Software-Update von entsprechenden Modulen in den Systemkomponenten SK1 bis SKn. Hierbei erfolgt wiederum eine Überprüfung der zugreifenden Person beziehungsweise Instanz, sowie eine Klärung der Rechte, das entsprechende Update durchzuführen. Ferner erfolgt eine erste Überprüfung des jeweiligen Authentizitäts- beziehungsweise des betreffenden Integritätssicherungsmerkmals (S1 - Sn) der Software. Analoges gilt für den Austausch von Hardware-Modulen in den Systemkomponenten SK1 bis SKn.

Im Folgenden werden weitere Ausgestaltungen der Erfindung beschrieben.

So kann der Datenaustausch bei der Überprüfung der Authentifizierungsmerkmale K1 bis Kn, sowie der weiteren Authentifizierungs- beziehungsweise Integritätssicherungsmerkmale S1 bis Sn zwischen dem zentralen Prüfmodul PM und den jeweiligen Systemkomponenten SK1 bis SKn gesichert werden. Die Sicherung kann durch eine interne digitale Signatur oder durch einen MAC (Message Authentication Code) durchgeführt werden. Zusätzliche können die ausgetauschten Datensätze verschlüsselt werden. Die systemintern verwendeten kryptografischen Funktionen sind unabhängig von den kryptografischen Mechanismen, mit denen beispielsweise die Authentifizierungsmerkmale K1 bis Kn und die Integritätssicherungsmerkmale S1 bis Sn erzeugt wurden. Insbesondere müssen diese Mechanismen nicht in den Systemkomponenten SK1 bis SKn implementiert werden, und es kann weiter intern ein autarkes Schlüsselmanagement verwendet werden. Als Schlüsselverteilzentrale kann das Prüfmodul PM mit einer entsprechenden Ausgestaltung fungieren.

Bei einer weiteren Ausgestaltung der Erfindung kann die Bildung der Authentifizierungsmerkmale K1 bis Kn der Hardwaremodule ebenfalls von systeminternen Kryptofunktionen übernommen werden. Hierbei werden beispielsweise die Authentifizierungsmerkmale K1 bis Kn in einem Initialisierungsschritt von dem jeweiligen System S selbst erzeugt. Auch dies kann zentral im Prüfmodul PM durchgeführt werden.

Extern und intern können entsprechend den jeweiligen Sicherheitsanforderungen sowohl symmetrische als auch asymmetrische Kryptoverfahren angewendet werden.

## Patentansprüche

1. Verfahren zur Sicherung eines vernetzten Systems (S), das über einen Systembus (SB) verbundene Systemkomponenten (SK1...SKn) mit Hardware- und Software-Modulen aufweist,
dadurch gekennzeichnet
daß die Systemkomponenten (SK1...SKn) jeweils ein Authentifizierungsmerkmal (K1...Kn) für die Hardware-Module und/oder jeweils ein weiteres Authentifizierungs- beziehungsweise ein Integritätssicherungsmerkmal (S1...Sn) für die Software-Module aufweisen, und
daß ein am Systembus (SB) angeschaltetes, zentrales Prüfmodul (PM) zur Überprüfung der Authentifizierungsmerkmale (K1...Kn) und/oder der Integritätssicherungsmerkmale (S1...Sn) vorgesehen ist.

2. Verfahren nach Anspruch 1,
gekennzeichnet durch
ein mit dem Prüfmodul (PM) verbundenes Informationsmodul (IM) zur Ausgabe von dessen Meldungen.

3. Verfahren nach Anspruch 1 oder 2,
gekennzeichnet durch
eine Eingabe-Ausgabe-Schnittstelle (EAS) im Prüfmodul (PM), die die einzige externe Zugriffsmöglichkeit auf das System (S) bildet, wobei das Prüfmodul (PM) eine Authentifizierung und eine Überprüfung der Zugriffsrechte bei einem externen Zugriff durchführt.

4. Verfahren nach einem der vorhergehenden Ansprüche,
dadurch gekennzeichnet
daß der Datenaustausch zur Prüfung der Authentifizierungsmerkmale (K1...Kn) und/oder der weiteren Authentifizierungsbeziehungsweise Integritätssicherungsmerkmale (S1...Sn) zwischen dem Prüfmodul (PM) und jeweils einer der Systemkomponenten (SK1...SKn) durch digitale Signaturen oder MACs (Message Authentication Codes) und/oder Verschlüsselung geschützt wird.

5. Verfahren nach einem der vorhergehenden Ansprüche,
dadurch gekennzeichnet
daß für eine über die Eingabe-Ausgabe-Schnittstelle (EAS) des Prüfmoduls (PM) in das System (S) eingespielte Software im Prüfmodul (PM) das zugehörige Integritätssicherungsmerkmale (S1 - Sn) geprüft wird und die Software digital signiert oder durch einen MAC geschützt und/oder verschlüsselt und zu einer der Systemkomponenten (SK1...SKn) übertragen wird.

6. Verfahren nach Anspruch 4 oder 5,
dadurch gekennzeichnet
daß die interne digitale Signatur und/oder MAC-Sicherung und/oder Verschlüsselung autark im System (S) durchgeführt wird.

7. Verfahren nach einem der vorhergehenden Ansprüche,
dadurch gekennzeichnet
daß in einem Initialisierungsschritt die Authentifizierungsmerkmale (K1...Kn) der Hardware-Module der Systemkomponenten (SK1...SKn) systemintern erzeugt werden.
